(19) Europäisches Patentamt
European Patent Office
Office européen des brevets

(11) **EP 4 481 359 B1**

(12) **EUROPEAN PATENT SPECIFICATION**

(45) Date of publication and mention
of the grant of the patent:
**11.02.2026 Bulletin 2026/07**

(21) Application number: **23786451.7**

(22) Date of filing: **06.07.2023**

(51) International Patent Classification (IPC):
**G01M 13/04** *(2019.01)* **F03D 17/00** *(2016.01)*

(52) Cooperative Patent Classification (CPC):
**F03D 17/032; F03D 17/015; Y02E 10/72**

(86) International application number:
**PCT/CN2023/106149**

(87) International publication number:
**WO 2024/229966 (14.11.2024 Gazette 2024/46)**

(54) **OPERATION MONITORING METHOD AND DEVICE FOR WIND TURBINE BEARING HOLDER**

VERFAHREN UND VORRICHTUNG ZUR ÜBERWACHUNG DES BETRIEBS EINES WINDKRAFTLAGERHALTERS

PROCÉDÉ ET DISPOSITIF DE SURVEILLANCE DE FONCTIONNEMENT POUR PORTE-PALIER D'ÉOLIENNE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **09.05.2023 CN 202310510947**

(43) Date of publication of application:
**25.12.2024 Bulletin 2024/52**

(73) Proprietor: **Shandong Golden Empire Precision Machinery Technology Co., Ltd**
**Liaocheng, Shandong 252035 (CN)**

(72) Inventors:
• **ZHENG, Guanghui**
**Liaocheng, Shandong 252035 (CN)**
• **ZHAO, Peizhen**
**Liaocheng, Shandong 252035 (CN)**

(74) Representative: **Huang, Liwei**
**Cäcilienstraße 12**
**40597 Düsseldorf (DE)**

(56) References cited:
EP-B1- 2 805 074          CN-A- 105 043 737
CN-A- 105 043 737       CN-A- 109 035 731
CN-A- 109 115 499       CN-A- 113 063 546
CN-A- 114 576 102       CN-A- 114 705 429
CN-A- 115 290 327       CN-A- 115 539 327
CN-A- 115 931 335       CN-A- 116 070 154
CN-A- 116 223 037       JP-A- 2007 298 080
JP-A- 2010 159 710      US-A1- 2015 177 100
US-B2- 11 460 006

## Description

### Technical Field

The present application relates to the field of data monitoring and prediction, and in particular, to a method and device for monitoring operation of a wind power bearing holder.

### Background Art

As a kind of green energy, wind power has developed at an unexpected speed since the 1980s, and has become a new energy power generation mode widely used with the maturity of related technology. With the long-term operation of a wind power generator under complex alternating loads, the requirements of the wind power transmission system are becoming more and more stringent. As a key component of the wind power generator, the bearing plays a vital role in ensuring the reliability of the whole wind power generator.

At present, the failure rate of the gearbox and the motor in the wind power generator is high, and most of these failures are caused by the failure of the wind power bearing. The existing vibration sensors are generally installed inside the wind power generator to monitor the operation state of the wind power spindle, monitor abnormalities of signals such as voltage, current and power in the wind power generator, and indirectly monitor operation of the wind power bearing or the wind power bearing holder.

However, the above-mentioned vibration sensor monitoring method is difficult to monitor the operation characteristic quantities of the specific operation condition of the wind power bearing or the wind power bearing holder, and is hysteretic as the operation characteristic quantities are often monitored only after a fault occurs and causes severe vibrations. In addition, the location of a wind power generation device is often remote, and the maintenance time period is too long, so that it is easy to cause irreparable losses to the wind power generator, blades and hubs, etc., resulting in a large waste of resources. Besides, it is difficult to perform real-time on-line monitoring and prediction on the operation condition of the existing wind power generator, and it cannot be fed back to the maintenance personnel timely and by way of early warning, which increases the operation and maintenance costs of the wind power generator. Examples of prior art solutions are available in document CN 105 043 737 A.

### Summary

The embodiments of the present application provide a method and device for monitoring operation of a wind power bearing holder for solving the following technical problems: it is difficult to perform real-time on-line monitoring and prediction on the operation condition of an existing wind power generator, and there is a certain delay in fault reporting of wind power generators, which is not conducive to rapid maintenance for abnormal wind power generators and greatly increases maintenance costs.

The embodiments of the present application adopt the following technical solutions.

In an aspect, an embodiment of the present application provides a method for monitoring operation of a wind power bearing holder. The method includes: performing multi-cluster head assisted tracking at multi-point locations on an operation state of the wind power bearing holder via a plurality of sensing chips preinstalled in the wind power bearing holder to obtain point location tracking information; wherein the point location tracking information includes: target coordinate data and corresponding acceleration data of all sensing chips in any time period; performing point location-related orthogonal covering on the point location tracking information; and performing point location-related motion vector correction and prediction on orthogonally covered point location tracking information to obtain circumferential motion trajectories of the point locations; wherein the circumferential motion trajectories include: a current circumferential motion trajectory and a predicted circumferential motion trajectory; acquiring an instantaneous vibration circumferential trajectory of the wind power bearing holder according to a vibration acceleration of the wind power bearing holder; performing irregular trajectory filtering processing on the current circumferential motion trajectory in the circumferential motion trajectories with the instantaneous vibration circumferential trajectory to obtain an ideal circumferential motion trajectory of the wind power bearing holder; generating a corresponding ideal circumferential spatial region and a corresponding predicted circumferential spatial region for the ideal circumferential motion trajectory and the predicted circumferential motion trajectory, respectively; and comparing locations of spatial region probability centroids between the ideal circumferential spatial region and the predicted circumferential spatial region to obtain a predicted coincided spatial region; determining whether there is an abnormality in operation of the wind power bearing holder according to the predicted coincided spatial region to obtain operation monitoring information of the wind power bearing, to complete operation monitoring of the wind power generator.

The beneficial effect of the present application is that by monitoring the operation trajectory of the wind power bearing holder in the wind power spindle bearing, a real abnormal operation condition of the wind power bearing holder can be monitored in real time according to the error comparison between the predicted coincided spatial region and the actual coincided spatial region, and then whether there is an abnormality in operation the wind power spindle and the wind power generator can be predicted, which allows possible fault problems to be timely fed back to maintenance personnel so that they can arrive at the site timely to prevent further deterioration of potential faults. The on-line real-time monitoring and prediction of the operation of the wind power generator is facilitated, thereby reducing the delay time of reporting potential faults of the wind power generator, facilitating rapid maintenance of abnormal wind power generators, reducing maintenance costs, and ensuring the normal power generation efficiency of the wind power generator.

In a possible implementation, the performing multi-cluster head assisted tracking at multi-point locations on an operation state of the wind power bearing holder via a plurality of sensing chips preinstalled in the wind power bearing holder to obtain point location tracking information, specifically includes: performing signal acquisition on the plurality of sensing chips in the wind power bearing holder via a signal acquisition apparatus in a wind power generator to determine whether the wind power bearing holder is in operation; wherein the plurality of sensing chips are embedded to be uniformly distributed in the wind power bearing holder to enable the wind power bearing holder to achieve a rotational balance; in a case that the wind power bearing holder is in operation, determining a signal transmitting node of a first sensing chip in operation as a main cluster head node, and determining signal transmitting nodes of a second sensing chip and a third sensing chip as adjacent cluster head nodes; wherein the second sensing chip and the third sensing chip are located at left and right adjacent positions of the first sensing chip, respectively; performing three-dimensional spatial distance calculation with received signal carrier powers on the main cluster head node and the adjacent cluster head nodes based on a predefined time period according to a predefined received signal strength indicator (RSSI) algorithm to obtain main coordinate data and adjacent coordinate data in the current time period; wherein the main coordinate data and the adjacent coordinate data are both three-dimensional coordinate data; minimizing an average spatial distance of the adjacent coordinate data in the current time period according to a least squares algorithm, and performing median value-related calculation on a minimized spatial distance to obtain auxiliary coordinate data; and determining point location tracking information for all sensing chips based on the auxiliary coordinate data and the target coordinate data of the first sensing chip.

The advantageous effect of the present application is that the operation condition of a double-row self-aligning roller bearing can be monitored in real time by the plurality of sensing chips installed in the wind power bearing holder, i.e., the operation posture and operation trajectory of the wind power bearing holder in a three-dimensional space are tracked at multi-point locations in real time, and each sensing chip is tracked in real time based on the adjacent chips of each sensing chip according to the coordinated fusion of a plurality of cluster heads to obtain the main coordinate data and the adjacent coordinate data in the current time period.

In a possible implementation, the determining point location tracking information for all sensing chips based on the auxiliary coordinate data and target coordinate data of the first sensing chip, specifically includes: performing coordinate data-related weight value fusion on auxiliary coordinate data of the adjacent cluster head nodes and main coordinate data of the main cluster head node in the current time period to obtain the target coordinate data of the first sensing chip; determining the signal transmitting node of the first sensing chip as an adjacent cluster head node according to a grid structure of a predefined wireless sensor network (WSN), and determining the target coordinate data as adjacent coordinate data; minimizing an average spatial distance between coordinate data of the fourth sensing chip and the target coordinate data of the first sensing chip to obtain target coordinate data of the second sensing chip based on the coordinate data-related weight value fusion; wherein the fourth sensing chip and the first sensing chip are located in left and right adjacent positions of the second sensing chip; similarly, performing coordinate data-related weight value fusion on all the sensing chips, and determining target coordinate data of all the sensing chips; and acquiring acceleration data corresponding to the plurality of sensing chips in the current time period; and determining the point location tracking information of all the sensing chips based on the target coordinate data and corresponding acceleration data of all the sensing chips.

The advantageous effect of the present application is that when the adjacent cluster head nodes are fused into the main cluster head node, of the weight values of auxiliary coordinates and main coordinates are fused, so that target tracking of the main cluster head node, i.e., tracking of the first sensing chip, can be achieved according to the adjacent auxiliary cluster head nodes, and finally coordinate data and corresponding acceleration data of the first sensing chip can be achieved. Similarly, point location tracking information of the second, third and fourth sensing chips are obtained, thereby achieving point location tracking of all the sensing chips in the wind power bearing holder.

In a possible implementation, the performing point location-related orthogonal covering on the point location tracking information, specifically includes: performing point location sampling on the target coordinate data corresponding to each sensing chip in the point location tracking information in the current time period based on an orthogonal covering mechanism to obtain location data of multi-point locations related to the target coordinate data; dividing a sampled spatial region corresponding to the point location sampling according to the location data of the multi-point locations; calibrating signal strength of the location data of the multi-point locations through the sampled spatial region to obtain signal strength sequence numbers of the multi-point locations; determining a motion tendency of the location data of the multi-point locations according to the signal strength sequence numbers and a point location density in the sampled spatial region, and determining point location motion tendency data in the current time period with a point location having a greatest signal strength according to the signal strength sequence numbers as a reference point location; and acquiring the acceleration data corresponding to each sensing chip in the point tracking information; and associating the acceleration data and the location data of the multi-point locations in the sampled spatial region in one-to-one correspondence according to the point location motion tendency data, and generating a current circumferential motion trajectory based on the point location tracking information.

The advantageous effect of the present application is that the point location tracking information of each sensing chip is used to determine the sampled spatial region in the current time period, and different signal strength sequence numbers are obtained based on the different distances between each sensing chip in the sampled spatial region and the signal acquisition apparatus, so that the motion tendency of multi-point locations in the current sampled spatial region can be better determined according to the signal strength sequence numbers and the point location density and the point locations in the sampled spatial region, and then combined with the acceleration of each point location to finally form the current circumferential motion trajectory.

In a possible implementation, the performing point location-related motion vector correction and prediction on orthogonally covered point location tracking information to obtain circumferential motion trajectories of the point location, specifically includes: acquiring the orthogonally covered point location tracking information in the current time period; performing coordinate location vector prediction for a next time period on the target coordinate data in the current circumferential motion trajectory based on the acceleration data in the current circumferential motion trajectory according to a Lagrange interpolation function to obtain predicted target coordinate data; performing acceleration vector prediction for the next time period on the acceleration data in the current circumferential motion trajectory according to a locating distance between each point location in the current circumferential motion trajectory to obtain predicted acceleration data; sampling the predicted target coordinate data at predicted point locations; and dividing a predicted sampled spatial region corresponding to the predicted target coordinate data; determining a predicted motion tendency of the multi-point locations in the predicted sampled spatial region according to the signal strength sequence numbers of the predicted point locations and a corresponding predicted point location density in the predicted sampled spatial region; and generating a predicted circumferential motion trajectory based on the next time period according to the predicted point locations in the predicted sampled spatial region and the corresponding predicted acceleration data; and obtaining the circumferential motion trajectories of the point locations based on the predicted circumferential motion trajectory and the current circumferential motion trajectory.

The beneficial effect of the present application is that the coordinate data and the acceleration data of all the point locations in the next time period can be better predicted through the Lagrange interpolation function, and then the predicted circumferential motion trajectory corresponding to the current circumferential motion trajectory is generated for subsequent comparison and prediction of the operation trajectory of the wind power bearing holder.

In a possible implementation, the acquiring an instantaneous vibration circumferential trajectory of the wind power bearing holder according to a vibration acceleration of the wind power bearing holder, specifically includes: acquiring a vibration acceleration in the current time period by means of a vibration sensor in the wind power generator; performing quaternion differentiation division on the motion tendency data in the current circumferential motion trajectory according to a quaternion parameter algorithm to obtain a quaternion differentiation-related operation posture matrix; performing component division on the vibration acceleration in the current time period in each axial direction in a three-dimensional space according to the operation posture matrix to obtain vibration vector coordinate data; performing circumferential curve transient fitting on the vibration acceleration and the vibration vector coordinate data to obtain a transient fitting curve; and matching corresponding locations of the transient fitting curve based on a three-dimensional space where the wind power bearing holder is located, and determining an instantaneous vibration circumferential trajectory in the current time period.

The advantageous effect of the present application is that the vibration acceleration acquired by the vibration sensor preinstalled in the wind power generator is divided in various axial directions, and then the vibration vector data is subjected curve transient fitting to obtain the instantaneous vibration circumferential trajectory related to the vibration acceleration, so as to accurately identify an offset generated due to the vibration of an impeller load and obtain the instantaneous vibration circumferential trajectory of the wind power bearing holder with the offset.

In a possible implementation, the performing irregular trajectory filtering processing on the current circumferential motion trajectory in the circumferential motion trajectories with the instantaneous vibration circumferential trajectory to obtain an ideal circumferential motion trajectory of the wind power bearing holder, specifically includes: performing linear normalization processing on the instantaneous vibration circumferential trajectory and the current circumferential motion trajectory to obtain an instantaneous vibration circumferential curve and a current circumferential curve, respectively; wherein the instantaneous vibration circumferential curve and the current circumferential curve are both spiral circumferential curves; performing difference processing on corresponding coordinate points on the instantaneous vibration circumferential curve and the current circumferential curve to obtain distances of a plurality of coordinate points;

and performing median processing on the distances of the plurality of coordinate points to obtain a vibration difference distance; performing curve correction on the current circumferential curve according to the vibration difference distance to obtain a corrected circumferential curve; and performing vector processing on the corrected circumferential curve according to the acceleration data of the current circumferential motion trajectory to determine a corrected circumferential motion trajectory; and filtering out irregular trajectories of the current circumferential motion trajectory within a predefined error range with the corrected circumferential motion trajectory to obtain the ideal circumferential motion trajectory of the wind power bearing holder.

The beneficial effect of the present application is that the error of the current circumferential motion trajectory is corrected with the identified instantaneous vibration circumferential trajectory, and the current circumferential curve is corrected in time according to the vibration difference distance, so that the actual operation condition inside the wind power generator, i.e., the real circumferential motion trajectory of the wind power bearing holder, can be accurately acquired.

In a possible implementation, the generating a corresponding ideal circumferential spatial region and a corresponding predicted circumferential spatial region for the ideal circumferential motion trajectory and the predicted circumferential motion trajectory, respectively; and comparing locations of spatial region probability centroids between the ideal circumferential spatial region and the predicted circumferential spatial region to obtain a predicted coincided spatial region, specifically includes: generating a first spiral cylinder corresponding to the ideal circumferential spatial region and a second spiral cylinder corresponding to the predicted circumferential spatial region, respectively, according to the ideal circumferential motion trajectory and the predicted circumferential motion trajectory; wherein the first spiral cylinder and the second spiral cylinder both contain location information of multi-point locations; acquiring location information of a first point location in the first spiral cylinder; acquiring a point location distribution plane region corresponding to the location information of the first point location according to a saliency of a probability distribution function; and locating a centroid of the first spiral cylinder in the point location distribution plane region via the probability density function to obtain first centroid location information of the first spiral cylinder; locating a centroid of the second spiral cylinder in the point location distribution plane region to obtain second centroid location information of the second spiral cylinder; and performing a three-dimensional spatial coincidence comparison in a same time domain and a same space domain between the first spiral cylinder and the second spiral cylinder according to the first centroid location information and the second centroid location information, and determining a predicted coincided spatial region coinciding with the first spiral cylinder and the second spiral cylinder.

The beneficial effect of the present application is that a motion trajectory quantity with a time component, namely, a spiral cylinder, is constructed according to a circumferential motion trajectory in a three-dimensional space in each time period, and then according to the location of the centroid, coincidence comparison is performed on spatial regions where the spiral cylinders in different time periods are located to obtain a predicted coincided region, thereby facilitating the monitoring of the operation of the wind power bearing holder by predicting the coincidence of the spatial regions in different time periods in a normal situation.

In a possible implementation, the determining whether there is an abnormality in operation of the wind power bearing holder according to the predicted coincided spatial region to obtain operation monitoring information of the wind power bearing, specifically includes: determining a third spiral cylinder related to an actual circumferential spatial region according to an actual circumferential motion trajectory corresponding to the next time period; wherein the actual circumferential motion trajectory is a point location circumferential motion trajectory in the next time period of the ideal circumferential motion trajectory; locating a centroid of the third spiral cylinder in the point location distribution plane region to obtain third centroid location information of the third spiral cylinder; performing three-dimensional spatial coincidence comparison in a same time domain and a same spatial domain between the first spiral cylinder and the third spiral cylinder according to the third centroid location information to obtain a real coincided spatial region; and determining whether there is an abnormality in operation of the wind power bearing holder based on spatial region size determination information of the real coincided spatial region and the predicted coincided spatial region to obtain the operation monitoring information of the wind power bearing to complete operation monitoring of the wind power generator.

In another aspect, an embodiment of the present application further provides a device for monitoring operation of a wind power bearing holder. The device includes: at least one processor; and a memory in communication connection to the at least one processor; wherein the memory stores instructions executable by the at least one processor to enable the at least one processor to perform a method for monitoring operation of a wind power bearing holder according to any items of the described above.

The beneficial effect of the present application is that by monitoring the operation trajectory of the wind power bearing holder in the wind power spindle bearing, a real abnormal operation condition of the wind power bearing holder can be monitored in real time according to the error comparison between the predicted coincided spatial region and the actual coincided spatial region, and then whether there is an abnormality in operation of the wind power spindle and the wind power generator can be predicted, which allows possible fault problems to be timely fed back to maintenance personnel so that they can arrive at the site timely to prevent further deterioration of potential faults. The on-line real-time monitoring and prediction of the operation of the wind power generator is facilitated, thereby reducing the delay time of reporting potential faults of the wind power generator, facilitating rapid maintenance of abnormal wind power generators, reducing maintenance costs, and ensuring the normal power generation efficiency of the wind power generator.

## Brief Description of the Drawings

In order to explain the embodiments of the present application or the technical solutions in the prior art more clearly, the following will briefly introduce the drawings which need to be used in the embodiments or the description of the prior art. Obviously, the drawings in the following description are merely some embodiments of the present application, and it would have been obvious for a person skilled in the art to obtain other drawings according to these drawings without involving any inventive effort. In the drawings:

FIG. 1 is a flowchart of a method for monitoring operation of a wind power bearing holder according to an embodiment of the present application;
FIG. 2 is a schematic diagram showing a double-row self-aligning roller bearing according to an embodiment of the present application;
FIG. 3 is a schematic diagram showing a structure for monitoring the operation of a wind power bearing according to an embodiment of the present application;
FIG. 4 is a schematic diagram showing a sensing chip distribution of a wind power bearing holder according to an embodiment of the present application; and
FIG. 5 is a schematic diagram showing a device for monitoring operation of a wind power bearing holder according to an embodiment of the present application.

## Detailed Description of the Embodiments

In order to enable a person skilled in the art to better understand the technical solution of the present application, a clear and complete description of the technical solution of the embodiments of the present application will be provided below in conjunction with the accompanying drawings of the embodiments of the present application, and it is obvious that the embodiments described are only a part of the embodiments of the present application, rather than all the embodiments. Based on the embodiments of this description, all other embodiments obtained by a person skilled in the art without involving any inventive effort should fall within the scope of protection of the present application.

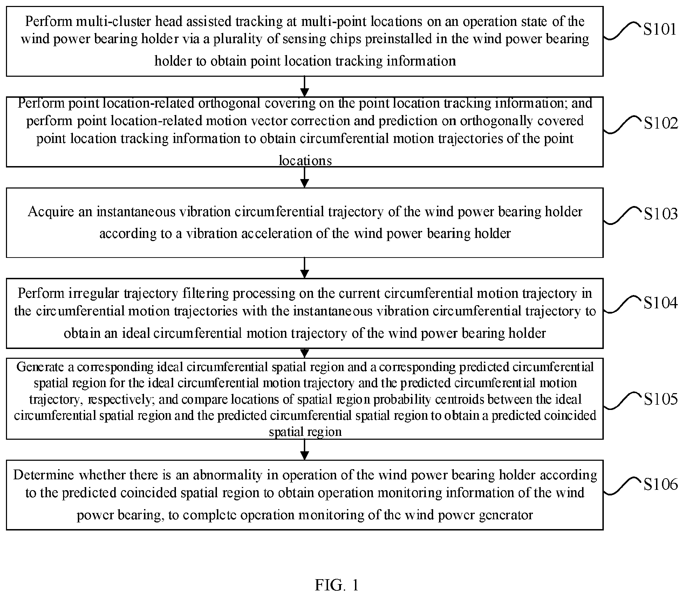

An embodiment of the present application provides a method for monitoring operation of a wind power bearing holder. As shown in FIG. 1, the method for monitoring operation of a wind power bearing holder specifically includes steps S101-S106.

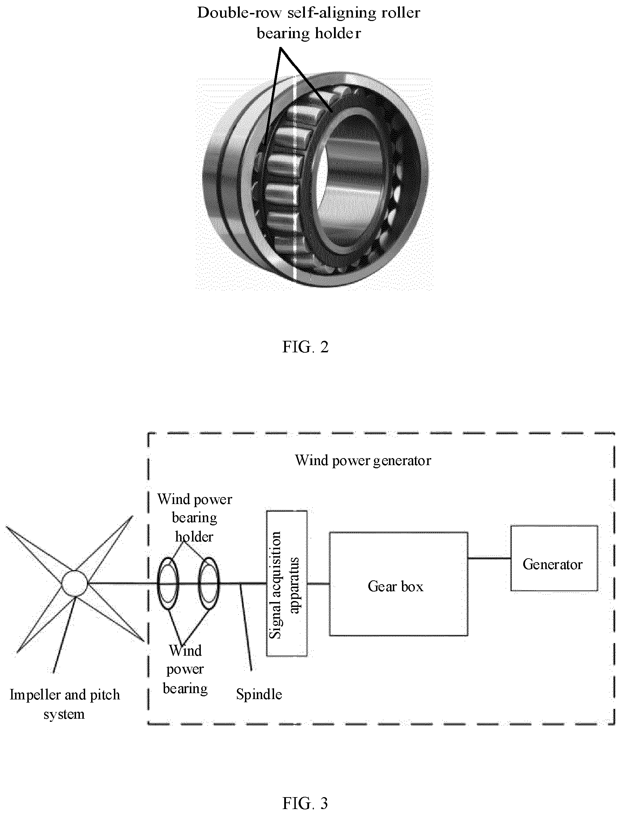

It should be noted that for a wind power transmission spindle of a wind power generator in a wind power generation device, there are two wind power bearings, and a double-row self-aligning roller bearing is generally used. Alternatively, for example, FIG. 2 is a schematic diagram showing a double-row self-aligning roller bearing according to an embodiment of the present application, and as shown in FIG. 2, the self-aligning roller bearing has double rows of balls therein and fixedly held by a bearing holder. During the operation of the wind power generator, the spindle will bear a certain load pressure, so that the centroid of the spindle will deflect, so the spindle may have a certain offset according to the features of the self-aligning roller bearing, and the wind power bearing holder may also perform a certain motion deflection with the offset of the spindle, that is, not only horizontal rotation, but also offsets in all directions, so monitoring the motion trajectory of the wind power bearing holder can achieve the operation monitoring of the wind power bearing, so that it can better reflect the operation of the wind power spindle, and thus reflect the operation of the whole wind power generator.

S101: Multi-cluster head assisted tracking is performed at multi-point locations on an operation state of the wind power bearing holder via a plurality of sensing chips preinstalled in the wind power bearing holder to obtain point location tracking information. The point location tracking information includes: target coordinate data and corresponding acceleration data of all sensing chips in any time period.

Specifically, signal acquisition is performed on the plurality of sensing chips in the wind power bearing holder via a signal acquisition apparatus in a wind power generator to determine whether the wind power bearing holder is in operation. The plurality of sensing chips are embedded to be uniformly distributed in the wind power bearing holder to enable the wind power bearing holder to achieve a rotational balance. In a case that the wind power bearing holder is in operation, a signal transmitting node of a first sensing chip in operation is determined as a main cluster head node, and signal transmitting nodes of a second sensing chip and a third sensing chip are determined as adjacent cluster head nodes. The second sensing chip and the third sensing chip are located at left and right adjacent positions of the first sensing chip, respectively.

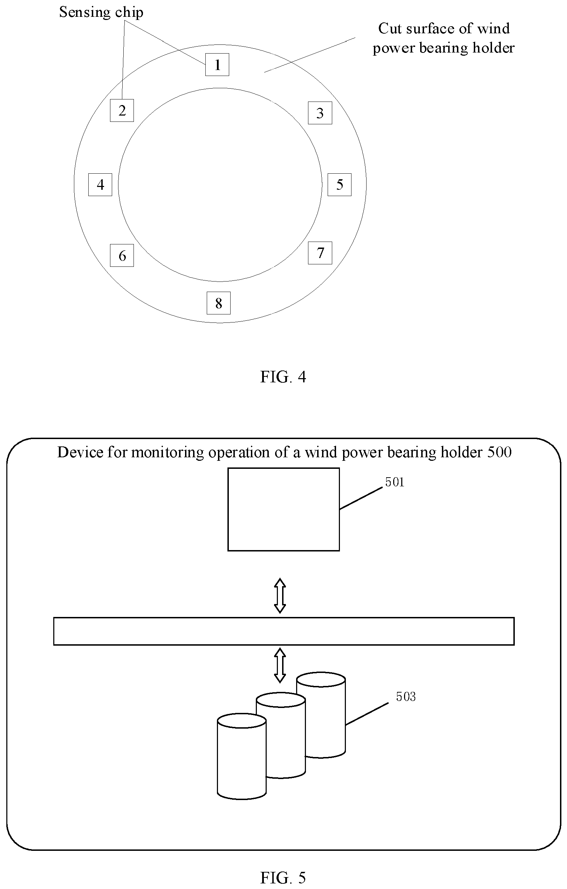

In an embodiment, FIG. 4 is a schematic diagram showing the distribution of sensing chips of a wind power bearing holder provided in an embodiment of the present application. As shown in FIG. 4, when a wind power bearing holder with a double-row self-aligning roller bearing is prepared, a plurality of sensing chips are put into the wind power bearing holder through a stamping process or an integral manufacturing process, and are uniformly distributed inside the holder, so that the holder in operation can meet dynamic balance requirements, ensuring the normal and stable operation of the holder. Then, according to the arrangement method shown in FIG. 4, eight sensing chips are arranged at one time on the left and right sides. At the same time, the sensing chip has a signal transmission function of transmitting real-time coordinate data and acceleration data, so that the signal acquisition apparatus acquires the transmitted signal.

In an embodiment, FIG. 3 is a schematic diagram showing a structure for monitoring operation of a wind power bearing provided by an embodiment of the present application. As shown in FIG. 3, the wind power bearing holder in operation is subjected to multi-cluster head assisted tracking at multi-point locations via a signal server connected to a signal acquisition apparatus in the wind power generator. At the same time, cluster heads of different levels are used to complete different tasks in different stages to improve the locating and tracking accuracy of the sensing chips and reduce the target loss rate of the point locations. The cluster heads include: a main cluster head node and auxiliary cluster head nodes.

Further, three-dimensional spatial distance calculation with received signal carrier powers is performed on the main cluster head node and the adjacent cluster head nodes based on a predefined time period according to a predefined received signal strength Indicator (RSSI) algorithm to obtain main coordinate data and adjacent coordinate data in a current time period. The main coordinate data and the adjacent coordinate data are three-dimensional coordinate data.

In an embodiment, a signal receiving apparatus calculates a relative distance with received signal carrier powers between the determined main cluster head node and adjacent cluster head nodes based on the RSSI algorithm:

$$d_y = d_0 * 10^{\frac{P_0 - P_y}{\alpha}} \quad d_x = d_0 * 10^{\frac{P_0 - P_x}{\beta}} \quad \text{and} \quad d_z = d_0 * 10^{\frac{P_0 - P_z}{\gamma}}$$

, wherein , , and are coordinate reference intermediate quantities, $P_0$ is a carrier power of a standard signal, $P_y$, $P_x$, and $P_z$ are carrier powers of y, x and z axes respectively, and $d_0$ is a predefined receiving distance of the standard signal, and then main coordinate data and adjacent coordinate data in the current time period are determined.

Further, an average spatial distance of the adjacent coordinate data in the current time period is minimized according to a least squares algorithm, and median value-related calculation is performed on a minimized spatial distance to obtain auxiliary coordinate data.

In an embodiment, two adjacent coordinate data in the current time period are represented by matrixes of variable locations, and a matrix A related to the second sensing chip and a matrix B corresponding to the third sensing chip are obtained, respectively. There may be a ranging error, so by adding a random error vector and combining with the least squares algorithm, the average spatial distance between the matrix A and the matrix B is minimized, and then the minimized spatial distance is subjected to a median value derivation to finally obtain the auxiliary coordinate data of two mutually mapped adjacent coordinates.

Further, coordinate data-related weight value fusion is performed on auxiliary coordinate data of the adjacent cluster head nodes and main coordinate data of the main cluster head node in the current time period to obtain target coordinate data of the first sensing chip.

As a possible implementation, the auxiliary coordinate data of the adjacent cluster head nodes is sent to the main cluster head node, and then the auxiliary coordinate data and the main coordinate data are de-weighted and divided as the proportions of their weights are different, i.e., the auxiliary coordinate data is fused into the main coordinate data to reduce the tracking and locating errors caused in the process of only tracking and locating the first sensing chip, thus ensuring the accuracy of the locating and tracking of the main coordinate data of the main cluster head node.

Further, similarly, the signal transmitting node of the first sensing chip is determined as an adjacent cluster head node according to a grid structure of a predefined wireless sensor network (WSN), and the target coordinate data is determined as adjacent coordinate data. An average spatial distance between coordinate data of a fourth sensing chip and the target coordinate data of the first sensing chip is minimized to obtain target coordinate data of the second sensing chip based on the coordinate data-related weight value fusion. The fourth sensing chip and the first sensing chip are located in left and right adjacent positions of the second sensing chip. Similarly, coordinate data-related weight value fusion is performed on all the sensing chips, and target coordinate data of all the sensing chips is determined. Acceleration data corresponding to the plurality of sensing chips in the current time period is acquired. Then the point location tracking information of all the sensing chips is finally determined based on the target coordinate data and corresponding acceleration data of all the sensing chips.

As a possible implementation, as shown in FIG. 4, the point location tracking of remaining sensors is performed sequentially according to the point location tracking of the first sensing chip. By analogy, the second sensing chip, the third sensing chip, the fourth sensing chip, etc. are sequentially determined as a main cluster head node, and corresponding adjacent sensing chips are sequentially determined as adjacent cluster head nodes to finally obtain target coordinate data of each sensing chip, then according to the time period where each sensing chip is in, acceleration data of each sensing chip in the corresponding time period is acquired , and the acceleration data and the target coordinate data of each sensing chip are finally determined as the point location tracking information of the point location where the sensing chip is located.

S102: Point location-related orthogonal covering is performed on the point location tracking information. Then, point location-related motion vector correction and prediction is performed on orthogonally covered point location tracking information to obtain circumferential motion trajectories of the point location. The circumferential motion trajectories include: a current circumferential motion trajectory and a predicted circumferential motion trajectory.

Specifically , point location sampling is performed on the target coordinate data corresponding to each sensing chip in the point location tracking information in the current time period based on an orthogonal covering mechanism to obtain location data of multi-point locations related to the target coordinate data. According to the location data of the multi-point locations, a sampled spatial region corresponding to the point location sampling is divided.

In an embodiment, for any two samples extracted from the point location tracking information, the three-dimensional coordinates corresponding to the two point locations are sampled and divided, and then the above-mentioned two point locations are orthogonally covered according to an orthogonal mechanism, i.e., sample point 1 $(X_1, Y_1, Z_1)$ and sample point 2 $(X_2, Y_2, Z_2)$; and location data of multi-point locations is obtained according to $X_{fin} = \beta X_1 + \alpha X_2$, $Y_{fin} = \beta Y_1 + \alpha Y_2$, and $Z_{fin} = \beta Z_1 + \alpha Z_2$, i.e., the multi-point location coordinates $(X_{fin}, Y_{fin},$ and $Z_{fin})$ in the location data; and then the sampled spatial region corresponding to the sampled point locations is divided according to the sampled and extracted location data, where $\alpha$ and $\beta$ are orthogonally covered intermediate quantities.

Further, signal strength of the location data of the multi-point locations is calibrated through the sampled spatial region to obtain signal strength sequence numbers of the multi-point locations. Then a motion tendency of the location data of the multi-point locations is determined according to the signal strength sequence numbers and a point location density in the sampled spatial region, and point location motion tendency data in the current time period is determined with a point location having a greatest signal strength according to the signal strength sequence numbers as a reference point location.

In an embodiment, according to 

$$P(N) = L \frac{\varepsilon (d1-d0)^2}{\mu}$$

, the signal strength of the location data of the sampled region is determined to obtain a signal strength sequence number P(N) of each point location, where L is a point location density, $\mu$ is a sampled spatial region, d1 is a signal receiving distance between the point location and the signal acquisition apparatus, d0 is an inherent error distance, $\varepsilon$ is a signal frequency parameter. Then, according to the signal strength sequence number of each point location, each point location is correspondingly marked, then according to the sequence number of the mark, the motion tendency of the location data of the multi-point locations is determined, and the point location with the greatest signal strength is taken as the reference point location. Finally, the point location motion tendency data in the current time period is determined.

Further, the acceleration data corresponding to each sensing chip in the point location tracking signal is first acquired. The acceleration data, and the location data of the multi-point locations in the sampled spatial region are associated in one-to-one correspondence according to the point location motion tendency data to generate a current circumferential motion trajectory based on the point location tracking information.

Further, the orthogonally covered point location tracking information in the current time period is acquired. Coordinate location vector prediction for a next time period is performed on the target coordinate data in the current circumferential motion trajectory based on the acceleration data in the current circumferential motion trajectory according to a Lagrange interpolation function to obtain predicted target coordinate data.

In an embodiment, wireless sensor network (WSN)-based point location coordinates in the orthogonally covered point location tracking information are all one-time coordinates, and the WSN point location coordinates in the next time period may move into a new coverage region. Since the mobile wireless sensor network nodes are in a low-speed state, and the coverage radius is generally not less than 10 m, the point location tracking information within a time period of 1 s can all be within the orthogonal coverage region of the sampled spatial region in the time period. Then, assuming that the coordinates corresponding to a k-period are $(X_k, Y_k,$ and $Z_k)$, the Lagrange interpolation function L(k) performs value prediction corresponding to the k-period. That is, the Lagrange interpolation function L(k) is used to perform Lagrange prediction by acquiring the target coordinate data in the current k-period to obtain predicted target coordinate data $(X_{k+1}, Y_{k+1},$ and $Z_{k+1})$ in a (k+1)-period.

As a possible implementation, according to 

$$L(i) = \frac{\sum_{k=0}^{i}[L(k-2)-L(k-3)]}{\sum_{k=0}^{i}(t_k-t_{k-1})}$$

, a Lagrange interpola-

tion function L(i) in the current k-period is obtained, where $t_k$ is an amount of time for the k-period, $t_{k-1}$ is an amount of time for a (k-1)-period, and L is a point location density. Then, according to the coordinate value of the x-axis of the k-period: $X_k = L(t) = L_1X_{k-1} + L_2X_{R-2}$ , where L(t) is a Lagrange interpolation function at time t, i.e., the x-axis coordinate $X_{k+1}$ in the (k+1)-period can be further obtained. Similarly, a y-axis coordinate and a z-axis coordinate in the (k+1)-period are obtained, and finally the predicted target coordinate data $(X_{k+1}, Y_{k+1},$ and $Z_{k+1})$ in the (k+1)-period is obtained.

Further, acceleration vector prediction for the next time period is performed on the acceleration data in the current circumferential motion trajectory according to a locating distance between each point location in the current circumferential motion trajectory to obtain predicted acceleration data. The predicted target coordinate data is then sampled at predicted point locations. A predicted sampled spatial region corresponding to the predicted target coordinate data is divided.

In an embodiment, with a marginal value $d_i$ in each axial direction of each orthogonally covered node in the current circumferential motion trajectory in the sampled spatial region, a locating distance $R_i$ between each point location in the current circumferential motion trajectory is obtained according to $R_i = \min(r, d_i)$, where $r$ is a standard radius distance of each node. Then acceleration vector prediction for the (k+1)-period is performed on the acceleration data in the current circumferential motion trajectory using the Lagrange interpolation function L(i) in the current k-period to obtain an acceleration vector in each axial direction, i.e., an x axis, a y axis and a z axis, and a predicted speed in the (k+1)-period; and then the speeds in the three axial directions are subjected to vector addition to obtain acceleration data at each point location in the (k+1)-period, wherein the x axis and the y axis are coordinate axes of a ball bearing in the same plane, and the z axis is the direction of the wind power spindle.

Further, a predicted motion tendency of multi-point locations in the predicted sampled spatial region is determined according to the signal strength sequence numbers of the predicted point locations and a corresponding predicted point location density in the predicted sampled spatial region. A predicted circumferential motion trajectory in the next time period is generated after matching the predicted acceleration data with the predicted point locations in the predicted sampled spatial region. The circumferential motion trajectories of the point locations are obtained based on the predicted circumferential motion trajectory and the current circumferential motion trajectory.

As a possible implementation, after the predicted target coordinate data and the corresponding acceleration data are obtained, point location sampling for the next time period is performed on the predicted target coordinate data corresponding to each sensing chip in the predicted point location tracking information to obtain location data of multiple predicted point locations related to the predicted target coordinate data. Then, a predicted sampled spatial region is divided corresponding to the point location sampling according to the location data of the predicted point locations. Signal strength of the location data of the multiple predicted point locations is calibrated through the predicted sampled spatial region to obtain signal strength sequence numbers related to the multiple predicted point locations. Then, a predicted motion tendency of the location data of multi-point locations is determined according to the signal strength sequence numbers and a point location density in the predicted sampled spatial region, and a predicted circumferential motion trajectory in the next time period is generated after matching the obtained predicted acceleration data with the predicted point locations in the predicted sampled spatial region.

S103: An instantaneous vibration circumferential trajectory of the wind power bearing holder is acquired according to a vibration acceleration of the wind power bearing holder.

Specifically, a vibration acceleration in the current time period is first acquired by means of a vibration sensor in the wind power generator. Then quaternion differentiation division is performed on the motion tendency data in the current circumferential motion trajectory according to a quaternion parameter algorithm to obtain a quaternion differentiation-related operation posture matrix.

Further, component division is performed on the vibration acceleration in the current time period in each axial direction in a three-dimensional space according to the operation posture matrix to obtain vibration vector coordinate data. Then, circumferential curve transient fitting is performed on the vibration acceleration and the vibration vector coordinate data to obtain a transient fitting curve.

Further, corresponding locations of the transient fitting curve are matched based on a three-dimensional space where the wind power bearing holder is located to determine the transient vibration circumferential trajectory in the current time period.

In an embodiment, firstly, the vibration acceleration in the current time period is acquired according to the vibration sensor in the wind power generator; the motion tendency data in the current circumferential motion trajectory is subjected to coordinate conversion according to a conversion relationship between absolute coordinates and relative coordinates using the quaternion, i.e., the target coordinate data and the acceleration data of each point location are converted to generate a quaternion difference equation; and then the quaternion difference equation is subjected to matrix transformation to generate a quaternion differentiation-related operation posture matrix.

In an embodiment, the vibration acceleration in the current time period is divided into components of an x-axis, a y-axis and a z-axis based on the quaternary parameters in the operation posture matrix to generate a vibration acceleration component matrix related to the axial directions, and then, through integration operation, the vibration acceleration component matrix is subjected to circumferential curve transient fitting to obtain a transient fitting curve, and then corresponding point locations in the transient fitting curve and a three-dimensional space where the current circumferential motion trajectory is located are subjected to one-to-one matching in a same time period with, so that the transient fitting curve and the current circumferential motion trajectory are located in a circumferential spatial region in a same time domain and a same space domain; and a transient vibration circumferential motion trajectory in the current time period is determined based on the corresponding vibration acceleration and the transient fitting circumferential motion trajectory.

S104: Irregular trajectory filtering processing is performed on the current circumferential motion trajectory in the circumferential motion trajectories with the instantaneous vibration circumferential trajectory to obtain an ideal circumferential motion trajectory of the wind power bearing holder.

Specifically, linear normalization processing is performed on the instantaneous vibration circumferential trajectory and the current circumferential motion trajectory to obtain an instantaneous vibration circumferential curve and a current circumferential curve, respectively. The instantaneous vibration circumferential curve and the current circumferential curve are both spiral circumferential curves.

Further, difference processing is performed on corresponding coordinate points on the instantaneous vibration circumferential curve and the current circumferential curve to obtain distances between a plurality of coordinate points. Median processing is performed on distances of the plurality of coordinate points to obtain a vibration difference distance.

Further, curve correction is performed on the current circumferential curve according to the vibration difference distance to obtain a corrected circumferential curve. Vector processing is performed on the corrected circumferential curve according to the acceleration data of the current circumferential motion trajectory to determine a corrected circumferential motion trajectory. Then, irregular trajectories of the current circumferential motion trajectory within a predefined error range are filtered out with the corrected circumferential motion trajectory to obtain the ideal circumferential motion trajectory of the wind power bearing holder.

In an embodiment, the instantaneous vibration circumferential trajectory and the current circumferential motion trajectory are first subjected to linear normalization processing to obtain the instantaneous vibration circumferential curve and the current circumferential curve for comparison and calculation. Then based on the difference between corresponding coordinate points of the instantaneous vibration circumferential curve and the current circumferential curve, the vibration difference distance of each point location is determined, so as to eliminate vibration of the current circumferential curve and ensure the uniformity and integrity of the current circumferential curve, and then the irregular trajectories of the current circumferential motion trajectory within the predefined error range are filtered out with the corrected circumferential motion trajectory to obtain the ideal circumferential motion trajectory of the wind power bearing holder.

S105: A corresponding ideal circumferential spatial region and a corresponding predicted circumferential spatial region are generated for the ideal circumferential motion trajectory and the predicted circumferential motion trajectory, respectively. Then, locations of spatial region probability centroids are compared between the ideal circumferential spatial region and the predicted circumferential spatial region to obtain a predicted coincided spatial region.

Specifically, a first spiral cylinder corresponding to the ideal circumferential spatial region and a second spiral cylinder corresponding to the predicted circumferential spatial region are generated, respectively, according to the ideal circumferential motion trajectory and the predicted circumferential motion trajectory. The first spiral cylinder and the second spiral cylinder both location information of multi-point locations.

Further, location information of a first point location in the first helical cylinder is acquired. Then, a point location distribution plane region corresponding to the location information of the first point location is acquired according to the saliency of the probability distribution function. A centroid of the first spiral cylinder in the point location distribution plane region is located via the probability density function to obtain first centroid location information of the first spiral cylinder. Then, a centroid of the second spiral cylinder in the point location distribution plane region is located to obtain second centroid location information of the second spiral cylinder.

Further, a three-dimensional spatial coincidence comparison is performed in a same time domain and a same space domain between the first spiral cylinder and the second spiral cylinder according to the first centroid location information and the second centroid location information, and a predicted coincided spatial region coinciding with the first spiral cylinder and the second spiral cylinder is determined.

In an embodiment, according to the data representation of the ideal circumferential motion trajectory and the predicted circumferential motion trajectory in the three-dimensional space, the first spiral cylinder corresponding to the ideal circumferential spatial region and the second spiral cylinder corresponding to the predicted circumferential spatial region are generated, respectively. The spatial locations and the spiral angles of the spiral cylinders are different in different time periods. Then the first point location information of the first spiral cylinder is subjected to significance recognition according to the saliency of the probability distribution function, and then the point location distribution plane region corresponding to the first point location information is acquired. Then the centroid of the spiral cylinder in the point location distribution plane region is located through the probability density function, and the centroid location data of the first spiral cylinder is identified to obtain the first centroid location information of the first spiral cylinder. Similarly, the centroid of the second spiral cylinder in the point location distribution plane region is located, and the centroid location data of the second spiral cylinder is identified to finally obtain the second centroid location information of the second spiral cylinder.

As a possible implementation, according to the first centroid location information and the second centroid location information, the first spiral cylinder and the second spiral cylinder are subjected spiral cylinder moving processing correspondingly in the three-dimensional space in the same time domain and the same space domain, then the first spiral cylinder and the second spiral cylinder are overlapped in spatial volume according to the location of each corresponding point location, and then a mutually coincided predicted coincided spatial region between the first spiral cylinder and the second spiral cylinder is determined to identify trajectory parts of identical circumferential trajectories of the ideal circumferential motion trajectory and the predicted circumferential motion trajectory, and eliminate the trajectory parts of different circumferential trajectories.

S106: Whether there is an abnormality in operation of the wind power bearing holder is determined according to the predicted coincided spatial region to obtain operation monitoring information of the wind power bearing to complete the operation monitoring of the wind power generator.

Specifically, a third spiral cylinder related to an actual circumferential spatial region is determined according to an actual circumferential motion trajectory corresponding to the next time period. The actual circumferential motion trajectory is a point location circumferential motion trajectory in the next time period of the ideal circumferential motion trajectory.

Further, a centroid of the third spiral cylinder in the point location distribution plane region is located to obtain third centroid location information of the third spiral cylinder.

Further, three-dimensional spatial coincidence comparison in a same time domain and a same spatial domain is performed between the first spiral cylinder and the third spiral cylinder according to the third centroid location information to obtain a real coincided spatial region.

Further, whether there is an abnormality in operation of the wind power bearing holder is determined based on spatial region size determination information of the real coincided spatial region and the predicted coincided spatial region to obtain the operation monitoring information of the wind power bearing to complete the operation monitoring of the wind power generator.

In an embodiment, the corresponding actual circumferential motion trajectory in the next time period is acquired first, and the third spiral cylinder related to the actual circumferential spatial region, i.e., a spiral cylinder corresponding to the operation trajectory of the wind power bearing holder in the next time period is constructed; and then the third spiral cylinder is compared with the first spiral cylinder in the current time period in terms of the space volume related to the centroid location information to obtain a real coincided spatial region between the first spiral cylinder and the third spiral cylinder, i.e., the actual point location circumferential motion trajectory of the wind power bearing holder from the current time period to the next time period. Then, the real coincided spatial region and the predicted coincided spatial region are compared in a same time domain and a same space domain to obtain a three-dimensional space coincidence degree, and the higher the coincidence degree is, the more the operation condition of the wind power bearing holder is consistent with the normal operation condition, namely, the more the operation condition of the wind power bearing is consistent with the normal operation condition. On the contrary, the lower the coincidence degree is, the more the operation condition of the wind power bearing holder deviates from the normal operation condition, and the more obvious the abnormal condition of the wind power bearing is, the more likely the potential fault is to be caused. Finally, the operation monitoring information of the wind power bearing is sent to the maintenance personnel through a server of the wind power generator, and the real-time operation monitoring of the wind power generator is realized. The potential fault under abnormal operation can be timely found out, and the maintenance personnel is enabled to make the maintenance plan in advance, so as prevent a further development of the fault of the wind power generator, and solve the potential abnormal risk that may cause large faults in advance.

In addition, an embodiment of the present application further provides a device for monitoring operation of a wind power bearing holder. As shown in FIG. 5, the device for monitoring operation of a wind power bearing holder 500 specifically includes:

at least one processor 501; and a memory 502 in communication connection to the at least one processor. The memory 502 stores instructions executable by the at least one processor 501 to enable the at least one processor 501 to:

> perform multi-cluster head assisted tracking at multi-point locations on an operation state of the wind power bearing holder via a plurality of sensing chips preinstalled in the wind power bearing holder to obtain point location tracking information; where the point location tracking information includes: target coordinate data and corresponding acceleration data of all sensing chips in any time period;
> perform point location-related orthogonal covering on the point location tracking information; and perform point location-related motion vector correction and prediction on orthogonally covered point location tracking information to obtain circumferential motion trajectories of the point locations; where the circumferential motion trajectories include: a current circumferential motion trajectory and a predicted circumferential motion trajectory;
> acquire an instantaneous vibration circumferential trajectory of the wind power bearing holder according to a vibration acceleration of the wind power bearing holder;
> perform irregular trajectory filtering processing on the current circumferential motion trajectory in the circumferential motion trajectories with the instantaneous vibration circumferential trajectory to obtain an ideal circumferential motion trajectory of the wind power bearing holder;
> generate a corresponding ideal circumferential spatial region and a corresponding predicted circumferential spatial region for the ideal circumferential motion trajectory and the predicted circumferential motion trajectory, respectively; and compare locations of spatial region probability centroids between the ideal circumferential spatial region and the predicted circumferential spatial region to obtain a predicted coincided spatial region; and
> determine whether there is an abnormality in operation of the wind power bearing holder according to the predicted coincided spatial region to obtain operation monitoring information of the wind power bearing, to complete operation monitoring of the wind power generator.

The beneficial effect of the present application is that by monitoring the operation trajectory of the wind power bearing holder in the wind power spindle bearing, a real abnormal operation condition of the wind power bearing holder can be monitored in real time according to the error comparison between the predicted coincided spatial region and the actual coincided spatial region, and then whether there is an abnormality in operation of the wind power spindle and the wind power generator can be predicted, which allows possible fault problems to be timely fed back to maintenance personnel so that they can arrive at the site timely to prevent further deterioration of potential faults. The on-line real-time monitoring and prediction of the operation of the wind power generator is facilitated, thereby reducing the delay time of reporting potential faults of the wind power generator, facilitating rapid maintenance of abnormal wind power generators, reducing maintenance costs, and ensuring the normal power generation efficiency of the wind power generator.

The various embodiments of the present application are described in a progressive manner, reference may be made to the same and similar parts of the various embodiments, and each of the embodiments focuses on the differences from the other embodiments. Device and non-volatile computer storage media embodiments are described briefly because they are substantially similar to method embodiments, and related parts are as described with respect to method embodiments.

Embodiments of the present application have been described above. In some cases, the acts or steps recited in the description may be performed in an order other than that of the embodiments and still achieve the desired results. Additionally, the processes depicted in the figures do not necessarily require a particular order or sequential order shown to achieve desired results. Multi-tasking and parallel processing are also possible or may be advantageous in some embodiments.

The scope of the invention is defined by the appended claims.

## Claims

1. A method for monitoring operation of a wind power bearing holder, comprising:
   performing multi-cluster head assisted tracking at multi-point locations on an operation state of the wind power bearing holder via a plurality of sensing chips preinstalled in the wind power bearing holder to obtain point location tracking information, specifically comprising:

   performing signal acquisition on the plurality of sensing chips in the wind power bearing holder via a signal acquisition apparatus in a wind power generator to determine whether the wind power bearing holder is in operation; wherein the plurality of sensing chips are embedded to be uniformly distributed in the wind power bearing holder to enable the wind power bearing holder to achieve a rotational balance;
   in a case that the wind power bearing holder is in operation, determining a signal transmitting node of a first sensing chip in operation as a main cluster head node, and determining signal transmitting nodes of a second sensing chip and a third sensing chip as adjacent cluster head nodes; wherein the second sensing chip and the third sensing chip are located at left and right adjacent positions of the first sensing chip, respectively;
   performing three-dimensional spatial distance calculation with received signal carrier powers on the main cluster head node and the adjacent cluster head nodes based on a predefined time period according to a predefined received signal strength indicator (RSSI) algorithm to obtain main coordinate data and adjacent coordinate data in a current time period; wherein the main coordinate data and the adjacent coordinate data are both three-dimensional coordinate data;
   minimizing an average spatial distance of the adjacent coordinate data in the current time period according to a least squares algorithm, and performing median value-related calculation on a minimized spatial distance to obtain auxiliary coordinate data; and
   determining point location tracking information for all sensing chips based on the auxiliary coordinate data and target coordinate data of the first sensing chip; wherein the point location tracking information comprises: target coordinate data and corresponding acceleration data of all sensing chips in any time period;
   performing point location-related orthogonal covering on the point location tracking information, specifically comprising:

   performing point location sampling on the target coordinate data corresponding to each sensing chip in the point location tracking information in the current time period based on an orthogonal covering mechanism to obtain location data of multi-point locations related to the target coordinate data;
   dividing a sampled spatial region corresponding to the point location sampling according to the location data of the multi-point locations;

calibrating signal strength of the location data of the multi-point locations through the sampled spatial region to obtain signal strength sequence numbers of the multi-point locations;

determining a motion tendency of the location data of the multi-point locations according to the signal strength sequence numbers and a point location density in the sampled spatial region, and determining point location motion tendency data in the current time period with a point location having a greatest signal strength according to the signal strength sequence numbers as a reference point location; and

acquiring the acceleration data corresponding to each sensing chip in the point tracking information; and associating the acceleration data and the location data of the multi-point locations in the sampled spatial region in one-to-one correspondence according to the point location motion tendency data, and generating a current circumferential motion trajectory based on the point location tracking information; and performing point location-related motion vector correction and prediction on orthogonally covered point location tracking information to obtain circumferential motion trajectories of the point locations, specifically comprising:

acquiring the orthogonally covered point location tracking information in the current time period;

performing coordinate location vector prediction for a next time period on the target coordinate data in the current circumferential motion trajectory based on the acceleration data in the current circumferential motion trajectory according to a Lagrange interpolation function to obtain predicted target coordinate data;

performing acceleration vector prediction for the next time period on the acceleration data in the current circumferential motion trajectory according to a locating distance between each point location in the current circumferential motion trajectory to obtain predicted acceleration data;

sampling the predicted target coordinate data at predicted point locations; and dividing a predicted sampled spatial region corresponding to the predicted target coordinate data;

determining a predicted motion tendency of multi-point locations in the predicted sampled spatial region according to signal strength sequence numbers of the predicted point locations and a corresponding predicted point location density in the predicted sampled spatial region; and generating a predicted circumferential motion trajectory in the next time period according to the predicted point locations in the predicted sampled spatial region and the corresponding predicted acceleration data; and

obtaining the circumferential motion trajectories of the point locations based on the predicted circumferential motion trajectory and the current circumferential motion trajectory; wherein the circumferential motion trajectories comprise: the current circumferential motion trajectory and the predicted circumferential motion trajectory;

acquiring an instantaneous vibration circumferential trajectory of the wind power bearing holder according to a vibration acceleration of the wind power bearing holder, specifically comprising:

acquiring a vibration acceleration in the current time period by means of a vibration sensor in the wind power generator;

performing quaternion differentiation division on the motion tendency data in the current circumferential motion trajectory according to a quaternion parameter algorithm to obtain a quaternion differentiation-related operation posture matrix;

performing component division on the vibration acceleration in the current time period in each axial direction in a three-dimensional space according to the operation posture matrix to obtain vibration vector coordinate data;

performing circumferential curve transient fitting on the vibration acceleration and the vibration vector coordinate data to obtain a transient fitting curve; and

matching corresponding locations of the transient fitting curve based on a three-dimensional space where the wind power bearing holder is located, and determining an instantaneous vibration circumferential trajectory in the current time period;

performing irregular trajectory filtering processing on the current circumferential motion trajectory in the circumferential motion trajectories with the instantaneous vibration circumferential trajectory to obtain an ideal circumferential motion trajectory of the wind power bearing holder, specifically comprising:

performing linear normalization processing on the instantaneous vibration circumferential trajectory and the current circumferential motion trajectory to obtain an instantaneous vibration circumferential curve and a current circumferential curve, respectively; wherein the instantaneous vibration circumferential curve and the current circumferential curve are both spiral circumferential curves;

performing difference processing on corresponding coordinate points on the instantaneous vibration circumferential curve and the current circumferential curve to obtain distances of a plurality of coordinate points; and performing median processing on the distances of the plurality of coordinate points to obtain a vibration difference distance;

performing curve correction on the current circumferential curve according to the vibration difference distance to obtain a corrected circumferential curve; and performing vector processing on the corrected circumferential curve according to the acceleration data of the current circumferential motion trajectory to determine a corrected circumferential motion trajectory; and filtering out irregular trajectories of the current circumferential motion trajectory within a predefined error range with the corrected circumferential motion trajectory to obtain the ideal circumferential motion trajectory of the wind power bearing holder;

generating a corresponding ideal circumferential spatial region and a corresponding predicted circumferential spatial region for the ideal circumferential motion trajectory and the predicted circumferential motion trajectory, respectively; and comparing locations of spatial region probability centroids between the ideal circumferential spatial region and the predicted circumferential spatial region to obtain a predicted coincided spatial region, specifically comprising:

generating a first spiral cylinder corresponding to the ideal circumferential spatial region and a second spiral cylinder corresponding to the predicted circumferential spatial region, respectively, according to the ideal circumferential motion trajectory and the predicted circumferential motion trajectory; wherein the first spiral cylinder and the second spiral cylinder both contain location information of multi-point locations;

acquiring location information of a first point location in the first spiral cylinder;

acquiring a point location distribution plane region corresponding to the location information of the first point location according to a saliency of a probability distribution function; and locating a centroid of the first spiral cylinder in the point location distribution plane region via the probability density function to obtain first centroid location information of the first spiral cylinder;

locating a centroid of the second spiral cylinder in the point location distribution plane region to obtain second centroid location information of the second spiral cylinder; and

performing a three-dimensional spatial coincidence comparison in a same time domain and a same space domain between the first spiral cylinder and the second spiral cylinder according to the first centroid location information and the second centroid location information, and determining a predicted coincided spatial region coinciding with the first spiral cylinder and the second spiral cylinder; and

determining whether there is an abnormality in operation of the wind power bearing holder according to the predicted coincided spatial region to obtain operation monitoring information of the wind power bearing, specifically comprising:

determining a third spiral cylinder related to an actual circumferential spatial region according to an actual circumferential motion trajectory corresponding to the next time period; wherein the actual circumferential motion trajectory is a point location circumferential motion trajectory in the next time period of the ideal circumferential motion trajectory;

locating a centroid of the third spiral cylinder in the point location distribution plane region to obtain third centroid location information of the third spiral cylinder;

performing three-dimensional spatial coincidence comparison in a same time domain and a same spatial domain between the first spiral cylinder and the third spiral cylinder according to the third centroid location information to obtain a real coincided spatial region; and

determining whether there is an abnormality in operation of the wind power bearing holder based on spatial region size determination information of the real coincided spatial region and the predicted coincided spatial region to obtain the operation monitoring information of the wind power bearing, to complete operation monitoring of the wind power generator.

2. The method for monitoring operation of a wind power bearing holder according to claim 1, wherein the determining point location tracking information for all sensing chips based on the auxiliary coordinate data and target coordinate data of the first sensing chip, specifically comprises:

performing coordinate data-related weight value fusion on auxiliary coordinate data of the adjacent cluster head nodes and main coordinate data of the main cluster head node in the current time period to obtain the target coordinate data of the first sensing chip;

determining the signal transmitting node of the first sensing chip as an adjacent cluster head node according to a grid structure of a predefined wireless sensor network (WSN), and determining the target coordinate data as adjacent coordinate data;

minimizing an average spatial distance between coordinate data of a fourth sensing chip and the target coordinate data of the first sensing chip to obtain target coordinate data of the second sensing chip based on the coordinate data-related weight value fusion; wherein the fourth sensing chip and the first sensing chip are located in left and right adjacent positions of the second sensing chip;

similarly, performing coordinate data-related weight value fusion on all the sensing chips, and determining target coordinate data of all the sensing chips; and acquiring acceleration data corresponding to the plurality of sensing chips in the current time period; and

determining the point location tracking information of all the sensing chips based on the target coordinate data and corresponding acceleration data of all the sensing chips.

3. A device for monitoring operation of a wind power bearing holder, comprising:

at least one processor; and

a memory in communication connection to the at least one processor; wherein

the memory stores instructions executable by the at least one processor to enable the at least one processor to perform the method for monitoring operation of a wind power bearing holder according to any one of claims 1-2.

**Patentansprüche**

1. Verfahren zum Überwachen des Betriebs eines Windkraftlagerhalters, umfassend:
Durchführen einer durch mehrere Cluster-Heads unterstützten Verfolgung an Mehrpunktlagen an einem Betriebszustand des Windkraftlagerhalters über eine Vielzahl von Erfassungschips, die in dem Windkraftlagerhalter vorinstalliert ist, um Punktlageverfolgungsinformationen zu erlangen, spezifisch umfassend:

Durchführen einer Signalakquisition an der Vielzahl von Erfassungschips in dem Windkraftlagerhalter über eine Signalakquisitionseinrichtung in einem Windkraftgenerator, um zu bestimmen, ob der Windkraftlagerhalter in Betrieb ist; wobei die Vielzahl von Erfassungschips eingebettet ist, um gleichmäßig in dem Windkraftlagerhalter verteilt zu sein, um es dem Windkraftlagerhalter zu ermöglichen, ein Rotationsgleichgewicht zu erreichen;

in einem Fall, dass der Windkraftlagerhalter in Betrieb ist, Bestimmen eines Signalübertragungsknotens eines ersten Erfassungschips in Betrieb als Haupt-Cluster-Head-Knoten und Bestimmen von Signalübertragungsknoten eines zweiten Erfassungschips und eines dritten Erfassungschips als Neben-Cluster-Head-Knoten; wobei sich der zweite Erfassungschip und der dritte Erfassungschip an einer linken bzw. rechten nebenliegenden Position des ersten Erfassungschips befinden;

Durchführen einer Berechnung eines dreidimensionalen Raumabstands mit Empfangssignalträgerleistungen an dem Haupt-Cluster-Head-Knoten und den Neben-Cluster-Head-Knoten basierend auf einer vordefinierten Zeitspanne gemäß einem vordefinierten Empfangssignalstärkeindikator(RSSI)-Algorithmus, um Hauptkoordinatendaten und Nebenkoordinatendaten in einer derzeitigen Zeitspanne zu erlangen; wobei die Hauptkoordinatendaten und die Nebenkoordinatendaten beide dreidimensionale Koordinatendaten sind;

Minimieren eines durchschnittlichen Raumabstands der Nebenkoordinatendaten in der derzeitigen Zeitspanne gemäß einem Algorithmus der kleinsten Quadrate und Durchführen einer medianwertbezogenen Berechnung an einem minimierten Raumabstand, um Hilfskoordinatendaten zu erlangen; und

Bestimmen von Punktlageverfolgungsinformationen für alle Erfassungschips basierend auf den Hilfskoordinatendaten und Zielkoordinatendaten des ersten Erfassungschips; wobei die Punktlageverfolgungsinformationen Folgendes umfassen: Zielkoordinatendaten und entsprechende Beschleunigungsdaten aller Erfassungschips in einer beliebigen Zeitspanne;

Durchführen einer punktlagebezogenen orthogonalen Abdeckung an den Punktlageverfolgungsinformationen, spezifisch umfassend:

Durchführen einer Punktlageabtastung an den Zielkoordinatendaten, die jedem Erfassungschip in den Punktlageverfolgungsinformationen entsprechen, in der derzeitigen Zeitspanne basierend auf einem orthogonalen Abdeckungsmechanismus, um Lagedaten von Mehrpunktlagen bezogen auf die Zielkoordinatendaten zu erlangen;

Aufteilen einer abgetasteten Raumregion, die der Punktlageabtastung entspricht, gemäß den Lagedaten der Mehrpunktlagen;

Kalibrieren der Signalstärke der Lagedaten der Mehrpunktlagen durch die abgetastete Raumregion, um Signalstärkesequenznummern der Mehrpunktlagen zu erlangen;

Bestimmen einer Bewegungstendenz der Lagedaten der Mehrpunktlagen gemäß den Signalstärkesequenznummern und einer Punktlagedichte in der abgetasteten Raumregion und Bestimmen von Punktlagebewegungstendenzdaten in der derzeitigen Zeitspanne mit einer Punktlage, die gemäß den Signalstärkesequenznummern eine größte Signalstärke aufweist, als Bezugspunktlage; und

Akquirieren der Beschleunigungsdaten, die jedem Erfassungschip in den Punktverfolgungsinformationen entsprechen; und Zuordnen der Beschleunigungsdaten und der Lagedaten der Mehrpunktlagen in der abgetasteten Raumregion in einer Eins-zu-Eins-Entsprechung gemäß den Punktlagebewegungstendenzdaten und Generieren einer derzeitigen Umfangsbewegungstrajektorie basierend auf den Punktlageverfolgungsinformationen; und Durchführen einer punktlagebezogenen Bewegungsvektorkorrektur und -vorhersage an orthogonal abgedeckten Punktlageverfolgungsinformationen, um Umfangsbewegungstrajektorien der Punktlagen zu erlangen, spezifisch umfassend:

Akquirieren der orthogonal abgedeckten Punktlageverfolgungsinformationen in der derzeitigen Zeitspanne;

Durchführen einer Koordinatenlagevektorvorhersage für eine nächste Zeitspanne an den Zielkoordinatendaten in der derzeitigen Umfangsbewegungstrajektorie basierend auf den Beschleunigungsdaten in der derzeitigen Umfangsbewegungstrajektorie gemäß einer Lagrange-Interpolationsfunktion, um vorhergesagte Zielkoordinatendaten zu erlangen;

Durchführen einer Beschleunigungsvektorvorhersage für die nächste Zeitspanne an den Beschleunigungsdaten in der derzeitigen Umfangsbewegungstrajektorie gemäß einem Lokalisierungsabstand zwischen jeder Punktlage in der derzeitigen Umfangsbewegungstrajektorie, um vorhergesagte Beschleunigungsdaten zu erlangen;

Abtasten der vorhergesagten Zielkoordinatendaten an vorhergesagten Punktlagen; und Aufteilen einer vorhergesagten abgetasteten Raumregion, die den vorhergesagten Zielkoordinatendaten entspricht;

Bestimmen einer vorhergesagten Bewegungstendenz von Mehrpunktlagen in der vorhergesagten abgetasteten Raumregion gemäß Signalstärkesequenznummern der vorhergesagten Punktlagen und einer entsprechenden vorhergesagten Punktlagedichte in der vorhergesagten abgetasteten Raumregion; und Generieren einer vorhergesagten Umfangsbewegungstrajektorie in der nächsten Zeitspanne gemäß den vorhergesagten Punktlagen in der vorhergesagten abgetasteten Raumregion und den entsprechenden vorhergesagten Beschleunigungsdaten; und

Erlangen der Umfangsbewegungstrajektorien der Punktlagen basierend auf der vorhergesagten Umfangsbewegungstrajektorie und der derzeitigen Umfangsbewegungstrajektorie; wobei die Umfangsbewegungstrajektorien Folgendes umfassen: die derzeitige Umfangsbewegungstrajektorie und die vorhergesagte Umfangsbewegungstrajektorie;

Akquirieren einer momentanen Schwingungsumfangstrajektorie des Windkraftlagerhalters gemäß einer Schwingungsbeschleunigung des Windkraftlagerhalters, spezifisch umfassend:

Akquirieren einer Schwingungsbeschleunigung in der derzeitigen Zeitspanne mittels eines Schwingungssensors in dem Windkraftgenerator;

Durchführen einer Quaternionendifferentiationsteilung an den Bewegungstendenzdaten in der derzeitigen Umfangsbewegungstrajektorie gemäß einem Quaternionenparameteralgorithmus, um eine quaternionendifferentiationsbezogene Betriebsposenmatrix zu erlangen;

Durchführen einer Komponententeilung an der Schwingungsbeschleunigung in der derzeitigen Zeitspanne in jeder axialen Richtung in einem dreidimensionalen Raum gemäß der Betriebsposenmatrix, um Schwingungsvektorkoordinatendaten zu erlangen;

Durchführen einer Umfangskurventransientenanpassung an der Schwingungsbeschleunigung und den Schwingungsvektorkoordinatendaten, um eine Transientenanpassungskurve zu erlangen; und

Abgleichen entsprechender Lagen der Transientenanpassungskurve basierend auf einem dreidimensionalen Raum, in dem sich der Windkraftlagerhalter befindet, und Bestimmen einer momentanen Schwingungsumfangstrajektorie in der derzeitigen Zeitspanne;

Durchführen einer Verarbeitung zum Filtern unregelmäßiger Trajektorien an der derzeitigen Umfangsbewegungstrajektorie in den Umfangsbewegungstrajektorien mit der momentanen Schwingungsumfangstrajektorie, um eine ideale Umfangsbewegungstrajektorie des Windkraftlagerhalters zu erlangen, spezifisch umfassend:

Durchführen einer Verarbeitung zur linearen Normalisierung an der momentanen Schwingungsumfangstrajektorie und der derzeitigen Umfangsbewegungstrajektorie, um eine momentane Schwingungsumfangskurve bzw. eine derzeitige Umfangskurve zu erlangen; wobei die momentane Schwingungsumfangskurve und die derzeitige Umfangskurve beide Spiralumfangskurven sind;

Durchführen einer Differenzverarbeitung an entsprechenden Koordinatenpunkten auf der momentanen Schwingungsumfangskurve und der derzeitigen Umfangskurve, um Abstände einer Vielzahl von Koordinatenpunkten zu erlangen; und Durchführen einer Medianverarbeitung an den Abständen der Vielzahl von Koordinatenpunkten, um einen Schwingungsdifferenzabstand zu erlangen;

Durchführen einer Kurvenkorrektur an der derzeitigen Umfangskurve gemäß dem Schwingungsdifferenzabstand, um eine korrigierte Umfangskurve zu erlangen; und Durchführen einer Vektorverarbeitung an der korrigierten Umfangskurve gemäß den Beschleunigungsdaten der derzeitigen Umfangsbewegungstrajektorie, um eine korrigierte Umfangsbewegungstrajektorie zu bestimmen; und

Herausfiltern unregelmäßiger Trajektorien der derzeitigen Umfangsbewegungstrajektorie innerhalb eines vordefinierten Fehlerbereichs mit der korrigierten Umfangsbewegungstrajektorie, um die ideale Umfangsbewegungstrajektorie des Windkraftlagerhalters zu erlangen;

Generieren einer entsprechenden idealen Umfangsraumregion und einer entsprechenden vorhergesagten Umfangsraumregion für die ideale Umfangsbewegungstrajektorie bzw. die vorhergesagte Umfangsbewegungstrajektorie; und Vergleichen von Lagen von Raumregionwahrscheinlichkeitsschwerpunkten zwischen der idealen Umfangsraumregion und der vorhergesagten Umfangsraumregion, um eine vorhergesagte koinzidierende Raumregion zu erlangen, spezifisch umfassend:

Generieren eines ersten Spiralzylinders, der der idealen Umfangsraumregion entspricht, bzw. eines zweiten Spiralzylinders, der der vorhergesagten Umfangsraumregion entspricht, gemäß der idealen Umfangsbewegungstrajektorie und der vorhergesagten Umfangsbewegungstrajektorie; wobei der erste Spiralzylinder und der zweite Spiralzylinder beide Lageinformationen von Mehrpunktlagen enthalten;

Akquirieren von Lageinformationen einer ersten Punktlage in dem ersten Spiralzylinder;

Akquirieren einer Punktlageverteilungsebenenregion, die den Lageinformationen der ersten Punktlage entspricht, gemäß einer Salienz einer Wahrscheinlichkeitsverteilungsfunktion; und Lokalisieren eines Schwerpunkts des ersten Spiralzylinders in der Punktlageverteilungsebenenregion über die Wahrscheinlichkeitsdichtefunktion, um erste Schwerpunktlageinformationen des ersten Spiralzylinders zu erlangen;

Lokalisieren eines Schwerpunkts des zweiten Spiralzylinders in der Punktlageverteilungsebenenregion, um zweite Schwerpunktlageinformationen des zweiten Spiralzylinders zu erlangen; und

Durchführen eines dreidimensionalen räumlichen Koinzidenzvergleichs in einem gleichen Zeitbereich und einem gleichen Raumbereich zwischen dem ersten Spiralzylinder und dem zweiten Spiralzylinder gemäß den ersten Schwerpunktlageinformationen und den zweiten Schwerpunktlageinformationen und Bestimmen einer vorhergesagten koinzidierenden Raumregion, die mit dem ersten Spiralzylinder und dem zweiten Spiralzylinder koinzidiert; und

Bestimmen, ob es gemäß der vorhergesagten koinzidierenden Raumregion eine Anomalie im Betrieb des Windkraftlagerhalters gibt, um Betriebsüberwachungsinformationen des Windkraftlagers zu erlangen, spezifisch umfassend:

Bestimmen eines dritten Spiralzylinders bezogen auf eine tatsächliche Umfangsraumregion gemäß einer tatsächlichen Umfangsbewegungstrajektorie, die der nächsten Zeitspanne entspricht; wobei die tatsächliche Umfangsbewegungstrajektorie eine Punktlageumfangsbewegungstrajektorie in der nächsten Zeitspanne der idealen Umfangsbewegungstrajektorie ist;

Lokalisieren eines Schwerpunkts des dritten Spiralzylinders in der Punktlageverteilungsebenenregion, um dritte Schwerpunktlageinformationen des dritten Spiralzylinders zu erlangen;

Durchführen eines dreidimensionalen räumlichen Koinzidenzvergleichs in einem gleichen Zeitbereich und einem gleichen räumlichen Bereich zwischen dem ersten Spiralzylinder und dem dritten Spiralzylinder gemäß den dritten Schwerpunktlageinformationen, um eine reale koinzidierende Raumregion zu erlangen; und

Bestimmen, ob es basierend auf Raumregionsgrößenbestimmungsinformationen der realen koinzidierenden Raumregion und der vorhergesagten koinzidierenden Raumregion eine Anomalie im Betrieb des Windkraftlagerhalters gibt, um die Betriebsüberwachungsinformationen des Windkraftlagers zu erlangen, um eine Betriebsüberwachung des Windkraftgenerators abzuschließen.

2. Verfahren zum Überwachen des Betriebs eines Windkraftlagerhalters gemäß Anspruch 1, wobei das Bestimmen von Punktlageverfolgungsinformationen für alle Erfassungschips basierend auf den Hilfskoordinatendaten und Zielkoordinatendaten des ersten Erfassungschips spezifisch Folgendes umfasst:

Durchführen einer koordinatendatenbezogenen Gewichtungswertfusion an Hilfskoordinatendaten der Neben-Cluster-Head-Knoten und Hauptkoordinatendaten des Haupt-Cluster-Head-Knotens in der derzeitigen Zeitspanne, um die Zielkoordinatendaten des ersten Erfassungschips zu erlangen;

Bestimmen des Signalübertragungsknotens des ersten Erfassungschips als Neben-Cluster-Head-Knoten gemäß einer Gitterstruktur eines vordefinierten drahtlosen Sensornetzwerks (WSN) und Bestimmen der Zielkoordinatendaten als Nebenkoordinatendaten;

Minimieren eines durchschnittlichen Raumabstands zwischen Koordinatendaten eines vierten Erfassungschips und den Zielkoordinatendaten des ersten Erfassungschips, um Zielkoordinatendaten des zweiten Erfassungschips basierend auf der koordinatendatenbezogenen Gewichtungswertfusion zu erlangen; wobei sich der vierte Erfassungschip und der erste Erfassungschip an einer linken und rechten nebenliegenden Position des zweiten Erfassungschips befinden;

gleichermaßen Durchführen einer koordinatendatenbezogenen Gewichtungswertfusion an allen Erfassungschips und Bestimmen von Zielkoordinatendaten aller Erfassungschips; und Akquirieren von Beschleunigungsdaten, die der Vielzahl von Erfassungschips in der derzeitigen Zeitspanne entsprechen; und

Bestimmen der Punktlageverfolgungsinformationen aller Erfassungschips basierend auf den Zielkoordinatendaten und entsprechenden Beschleunigungsdaten aller Erfassungschips.

3. Vorrichtung zum Überwachen des Betriebs eines Windkraftlagerhalters, umfassend:

mindestens einen Prozessor; und

einen Speicher in Kommunikationsverbindung mit dem mindestens einen Prozessor; wobei

der Speicher Anweisungen speichert, die durch den mindestens einen Prozessor ausführbar sind, um es dem mindestens einen Prozessor zu ermöglichen, das Verfahren zum Überwachen des Betriebs eines Windkraftlagerhalters gemäß einem der Ansprüche 1-2 durchzuführen.

## Revendications

1. Procédé permettant la surveillance de fonctionnement d'un porte-palier d'énergie éolienne, comprenant :
la réalisation d'un suivi assisté de multiples têtes de grappe au niveau d'emplacements multipoints sur un état de fonctionnement du porte-palier d'énergie éolienne par l'intermédiaire d'une pluralité de puces de détection préinstallées dans le porte-palier d'énergie éolienne pour obtenir des informations de suivi d'emplacement de point, comprenant spécifiquement :

la réalisation d'une acquisition de signal sur la pluralité de puces de détection dans le porte-palier d'énergie éolienne par l'intermédiaire d'un appareil d'acquisition de signal dans un générateur d'énergie éolienne pour déterminer si le porte-palier d'énergie éolienne est en fonctionnement ;
ladite pluralité de puces de détection étant incorporées pour être distribuées uniformément dans le porte-palier d'énergie éolienne afin de permettre au porte-palier d'énergie éolienne d'atteindre un équilibre de rotation ;

dans le cas où le porte-palier d'énergie éolienne est en fonctionnement, la détermination d'un nœud de transmission de signal d'une première puce de détection en fonctionnement en tant que nœud de tête de grappe principal, et la détermination des nœuds de transmission de signal d'une deuxième puce de détection et d'une troisième puce de détection en tant que nœuds de tête de grappe adjacents ; ladite deuxième puce de détection et ladite troisième puce de détection étant situées au niveau de positions adjacentes gauche et droite de la première puce de détection, respectivement ;

la réalisation d'un calcul de distance spatiale tridimensionnelle avec des puissances de porteuse de signal reçues sur le nœud de tête de grappe principal et les nœuds de tête de grappe adjacents sur la base d'une période de temps prédéfinie selon un algorithme d'indicateur d'intensité de signal reçu prédéfini (RSSI) pour obtenir des données de coordonnées principales et des données de coordonnées adjacentes dans une période de temps actuelle ; lesdites données de coordonnées principales et lesdites données de coordonnées adjacentes étant toutes deux des données de coordonnées tridimensionnelles ;

la minimisation d'une distance spatiale moyenne des données de coordonnées adjacentes dans la période de temps actuelle selon un algorithme des moindres carrés, et la réalisation d'un calcul lié à la valeur médiane sur une distance spatiale minimisée pour obtenir des données de coordonnées auxiliaires ; et

la détermination d'informations de suivi d'emplacement de point pour toutes les puces de détection sur la base des données de coordonnées auxiliaires et des données de coordonnées cibles de la première puce de détection ; lesdites informations de suivi d'emplacement de point comprenant :

des données de coordonnées cibles et des données d'accélération correspondantes de toutes les puces de détection dans n'importe quelle période de temps ;

la réalisation d'un recouvrement orthogonal lié à l'emplacement du point sur les informations de suivi d'emplacement de point, comprenant spécifiquement :

la réalisation d'un échantillonnage d'emplacement de point sur les données de coordonnées cibles correspondant à chaque puce de détection dans les informations de suivi d'emplacement de point dans la période de temps actuelle sur la base d'un mécanisme de recouvrement orthogonal pour obtenir des données d'emplacement d'emplacements multipoints liés aux données de coordonnées cibles ;

la division d'une zone spatiale échantillonnée correspondant à l'échantillonnage de l'emplacement de points selon les données d'emplacement des emplacements multipoints ;

l'étalonnage de l'intensité de signal des données d'emplacement des emplacements multipoints à travers la zone spatiale échantillonnée pour obtenir des numéros de séquence d'intensité de signal des emplacements multipoints ;

la détermination d'une tendance de mouvement des données d'emplacement des emplacements multipoints selon les numéros de séquence d'intensité de signal et une densité d'emplacement de point dans la zone spatiale échantillonnée, et la détermination des données de tendance de mouvement d'emplacement de point dans la période de temps actuelle avec un emplacement de point possédant une plus grande intensité de signal selon les numéros de séquence d'intensité de signal en tant qu'emplacement de point de référence ; et

l'acquisition des données d'accélération correspondant à chaque puce de détection dans les informations de suivi de point ; et l'association des données d'accélération et des données d'emplacement des emplacements multipoints dans la zone spatiale échantillonnée en correspondance biunivoque selon les données de tendance de mouvement d'emplacement de point, et la génération d'une trajectoire de mouvement circonférentielle actuelle sur la base des informations de suivi d'emplacement de point ; et la réalisation d'une correction et d'une prédiction de vecteur de mouvement lié à l'emplacement de point sur des informations de suivi d'emplacement de point couverts orthogonalement pour obtenir des trajectoires de mouvement circonférentielles des emplacements de point, comprenant spécifiquement :

l'acquisition des informations de suivi d'emplacement de point couvertes orthogonalement dans la période de temps actuelle ;

la réalisation d'une prédiction de vecteur d'emplacement de coordonnées pour une période de temps suivante sur les données de coordonnées cibles dans la trajectoire de mouvement circonférentielle actuelle sur la base des données d'accélération dans la trajectoire de mouvement circonférentielle actuelle selon une fonction d'interpolation de Lagrange pour obtenir des données de coordonnées cibles prédites ;

la réalisation d'une prédiction de vecteur d'accélération pour la période de temps suivante sur les données d'accélération dans la trajectoire de mouvement circonférentielle actuelle selon une distance de localisation entre chaque emplacement de point dans la trajectoire de mouvement circonférentielle actuelle pour obtenir des données d'accélération prédites ;

l'échantillonnage des données de coordonnées cibles prédites au niveau d'emplacements de points prédits ; et la division d'une zone spatiale échantillonnée prédite correspondant aux données de coordonnées cibles prédites ;

la détermination d'une tendance de mouvement prédite d'emplacements multipoints dans la zone spatiale échantillonnée prédite selon des numéros de séquence d'intensité de signal des emplacements de point prédits et une densité d'emplacements de point prédits correspondante dans la zone spatiale échantillonnée prédite ; et la génération d'une trajectoire de mouvement circonférentielle prédite dans la période de temps suivante selon les emplacements de point prédits dans la zone spatiale échantillonnée prédite et les données d'accélération prédites correspondantes ; et l'obtention des trajectoires de mouvement circonférentielles des emplacements de point sur la base de la trajectoire de mouvement circonférentielle prédite et de la trajectoire de mouvement circonférentielle actuelle ; lesdites trajectoires de mouvement circonférentielles comprenant : la trajectoire de mouvement circonférentielle actuelle et la trajectoire de mouvement circonférentielle prédite ;

l'acquisition d'une trajectoire circonférentielle de vibration instantanée du porte-palier d'énergie éolienne selon une accélération de vibration du porte-palier d'énergie éolienne, comprenant spécifiquement :

l'acquisition d'une accélération de vibration dans la période de temps actuelle au moyen d'un capteur de vibration dans le générateur d'énergie éolienne ;

la réalisation d'une division de différenciation de quaternions sur les données de tendance de mouvement dans la trajectoire de mouvement circonférentielle actuelle selon un algorithme de paramètres de quaternions pour obtenir une matrice de posture d'opération liée à la différenciation de quaternions ;

la réalisation d'une division de composant sur l'accélération de vibration dans la période de temps actuelle dans chaque direction axiale dans un espace tridimensionnel selon la matrice de posture de fonctionnement pour obtenir des données de coordonnées de vecteur de vibration ;

la réalisation d'un ajustement transitoire de courbe circonférentielle sur les données d'accélération de vibration et de coordonnées de vecteur de vibration pour obtenir une courbe d'ajustement transitoire ; et

la correspondance des emplacements correspondants de la courbe d'ajustement transitoire sur la base d'un espace tridimensionnel où le porte-palier d'énergie éolienne est situé, et la détermination d'une trajectoire circonférentielle de vibration instantanée dans la période de temps actuelle ;

la réalisation d'un traitement de filtrage de trajectoire irrégulière sur la trajectoire de mouvement circonférentielle actuelle dans les trajectoires de mouvement circonférentielles avec la trajectoire circonférentielle de vibration instantanée pour obtenir une trajectoire de mouvement circonférentielle idéale du porte-palier d'énergie éolienne, comprenant spécifiquement :

la réalisation d'un traitement de normalisation linéaire sur la trajectoire circonférentielle de vibration instantanée et la trajectoire de mouvement circonférentielle actuelle pour obtenir une courbe circonférentielle de vibration instantanée et une courbe circonférentielle actuelle, respectivement ; ladite courbe circonférentielle de vibration instantanée et ladite courbe circonférentielle actuelle étant toutes deux des courbes circonférentielles en spirale ;

la réalisation d'un traitement de différence sur des points de coordonnées correspondants sur la courbe circonférentielle de vibration instantanée et la courbe circonférentielle actuelle pour obtenir des distances d'une pluralité de points de coordonnées ; et la réalisation d'un traitement médian sur les distances de la pluralité de points de coordonnées pour obtenir une distance de différence de vibration ;

la réalisation d'une correction de courbe sur la courbe circonférentielle actuelle selon la distance de différence de vibration pour obtenir une courbe circonférentielle corrigée ; et la réalisation d'un traitement vectoriel sur la courbe circonférentielle corrigée selon les données d'accélération de la trajectoire de mouvement circonférentielle actuelle pour déterminer une trajectoire de mouvement circonférentielle corrigée ; et

le filtrage des trajectoires irrégulières de la trajectoire de mouvement circonférentielle actuelle dans une plage d'erreur prédéfinie avec la trajectoire de mouvement circonférentielle corrigée pour obtenir la trajectoire de mouvement circonférentielle idéale du porte-palier d'énergie éolienne ;

la génération d'une zone spatiale circonférentielle idéale correspondante et d'une zone spatiale circonférentielle prédite correspondante pour la trajectoire de mouvement circonférentielle idéale et la trajectoire de mouvement circonférentielle prédite, respectivement ; et la comparaison d'emplacements de centroïdes de probabilité de zone spatiale entre la zone spatiale circonférentielle idéale et la zone spatiale circonférentielle prédite pour obtenir une zone spatiale coïncidée prédite, comprenant spécifiquement :

la génération d'un premier cylindre en spirale correspondant à la région spatiale circonférentielle idéale et d'un deuxième cylindre en spirale correspondant à la région spatiale circonférentielle prédite, respectivement, selon la trajectoire de mouvement circonférentielle idéale et la trajectoire de mouvement circonférentielle prédite ; ledit premier cylindre en spirale et ledit deuxième cylindre en spirale contenant tous deux des informations d'emplacement d'emplacements multipoints ;

l'acquisition d'informations d'emplacement d'un premier emplacement de point dans le premier cylindre en spirale ;

l'acquisition d'une zone de plan de distribution d'emplacement de point correspondant aux informations d'emplacement du premier emplacement de point selon une saillance d'une fonction de distribution de probabilité ; et la localisation d'un centroïde du premier cylindre en spirale dans la zone de plan de distribution d'emplacement de point par l'intermédiaire de la fonction de densité de probabilité pour obtenir des informations d'emplacement de premier centroïde du premier cylindre en spirale ;

la localisation d'un centroïde du deuxième cylindre en spirale dans la zone du plan de distribution d'emplacement de point pour obtenir des informations d'emplacement de deuxième centroïde du deuxième cylindre en spirale ; et

la réalisation d'une comparaison de coïncidence spatiale tridimensionnelle dans un même domaine temporel et un même domaine spatial entre le premier cylindre en spirale et le deuxième cylindre en spirale selon les informations d'emplacement du premier centroïde et les informations d'emplacement du deuxième centroïde, et la détermination d'une région spatiale coïncidée prédite coïncidant avec le premier cylindre en spirale et le deuxième cylindre en spirale ; et

la détermination pour savoir si une anomalie existe dans le fonctionnement du porte-palier d'énergie éolienne selon la zone spatiale coïncidée prédite pour obtenir des informations de surveillance de fonctionnement du palier d'énergie éolienne, comprenant spécifiquement :

la détermination d'un troisième cylindre en spirale lié à une zone spatiale circonférentielle réelle selon une trajectoire de mouvement circonférentielle réelle correspondant à la période de temps suivante ; ladite trajectoire de mouvement circonférentielle réelle étant une trajectoire de mouvement circonférentielle d'emplacement de point dans la période de temps suivante de la trajectoire de mouvement circonférentielle idéale ;

la localisation d'un centroïde du troisième cylindre en spirale dans la zone de plan de distribution d'emplacement de point pour obtenir des informations d'emplacement de troisième centroïde du troisième cylindre en spirale ;

la réalisation d'une comparaison de coïncidence spatiale tridimensionnelle dans un même domaine temporel et un même domaine spatial entre le premier cylindre en spirale et le troisième cylindre en spirale selon les informations d'emplacement du troisième centroïde pour obtenir une région spatiale coïncidée réelle ; et

la détermination pour savoir si une anomalie existe dans le fonctionnement du porte-palier d'énergie éolienne sur la base des informations de détermination de taille de zone spatiale de la zone spatiale coïncidée réelle et de la zone spatiale coïncidée prédite pour obtenir les informations de surveillance de fonctionnement du palier d'énergie éolienne, pour effectuer la surveillance de fonctionnement du générateur d'énergie éolienne.

2. Procédé permettant la surveillance du fonctionnement d'un porte-palier d'énergie éolienne selon la revendication 1, ladite détermination desdites informations de suivi d'emplacement de point pour toutes les puces de détection sur la base des données de coordonnées auxiliaires et des données de coordonnées cibles de la première puce de détection comprenant spécifiquement :

la réalisation d'une fusion de valeurs de poids liées à des données de coordonnées sur des données de coordonnées auxiliaires des nœuds de tête de grappe adjacents et des données de coordonnées principales du nœud de tête de grappe principal dans la période de temps actuelle pour obtenir les données de coordonnées cibles de la première puce de détection ;

la détermination du nœud de transmission de signal de la première puce de détection en tant que nœud de tête de grappe adjacent selon une structure de grille d'un réseau de capteurs sans fil prédéfini (WSN), et la détermination des données de coordonnées cibles en tant que données de coordonnées adjacentes ;

la minimisation d'une distance spatiale moyenne entre les données de coordonnées d'une quatrième puce de détection et les données de coordonnées cibles de la première puce de détection pour obtenir des données de coordonnées cibles de la deuxième puce de détection sur la base de la fusion de valeurs de poids liées aux données de coordonnées ; ladite quatrième puce de détection et ladite première puce de détection étant situées dans des positions adjacentes gauche et droite de la deuxième puce de détection ;

de même, la réalisation d'une fusion de valeurs de poids liées à des données de coordonnées sur toutes les puces de détection, et la détermination de données de coordonnées cibles de toutes les puces de détection ; et l'acquisition de données d'accélération correspondant à la pluralité de puces de détection dans la période de temps actuelle ; et

la détermination des informations de suivi d'emplacement de point de toutes les puces de détection sur la base des données de coordonnées cibles et des données d'accélération correspondantes de toutes les puces de détection.

3. Dispositif destiné à la surveillance du fonctionnement d'un porte-palier d'énergie éolienne, comprenant :

au moins un processeur ; et

une mémoire en connexion de communication avec l'au moins un processeur ;

ladite mémoire stockant des instructions pouvant être exécutées par l'au moins un processeur pour permettre à l'au moins un processeur de réaliser le procédé permettant la surveillance du fonctionnement d'un porte-palier d'énergie éolienne selon l'une quelconque des revendications 1-2.

Perform multi-cluster head assisted tracking at multi-point locations on an operation state of the wind power bearing holder via a plurality of sensing chips preinstalled in the wind power bearing holder to obtain point location tracking information ⟶ S101

Perform point location-related orthogonal covering on the point location tracking information; and perform point location-related motion vector correction and prediction on orthogonally covered point location tracking information to obtain circumferential motion trajectories of the point locations ⟶ S102

Acquire an instantaneous vibration circumferential trajectory of the wind power bearing holder according to a vibration acceleration of the wind power bearing holder ⟶ S103

Perform irregular trajectory filtering processing on the current circumferential motion trajectory in the circumferential motion trajectories with the instantaneous vibration circumferential trajectory to obtain an ideal circumferential motion trajectory of the wind power bearing holder ⟶ S104

Generate a corresponding ideal circumferential spatial region and a corresponding predicted circumferential spatial region for the ideal circumferential motion trajectory and the predicted circumferential motion trajectory, respectively; and compare locations of spatial region probability centroids between the ideal circumferential spatial region and the predicted circumferential spatial region to obtain a predicted coincided spatial region ⟶ S105

Determine whether there is an abnormality in operation of the wind power bearing holder according to the predicted coincided spatial region to obtain operation monitoring information of the wind power bearing, to complete operation monitoring of the wind power generator ⟶ S106

FIG. 1

Double-row self-aligning roller
bearing holder

FIG. 2

FIG. 3

Sensing chip

Cut surface of wind
power bearing holder

FIG. 4

Device for monitoring operation of a wind power bearing holder 500

501

503

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105043737 A